# EUROPEAN PATENT SPECIFICATION

(11) **EP 0 471 665 B1**
(45) Date of publication and mention of the grant of the patent: **31.01.1996**
(21) Application number: 89911227.0
(22) Date of filing: 12.05.1989
(51) Int. Cl.: B05D 5/08

(54) **NON-STICK EMBOSSER ROLL COATING**
NICHTKLEBENDE BESCHICHTUNG FÜR PRÄGEROLLE
REVETEMENT NON ADHERENT POUR ROULEAUX DE GAUFRAGE

(43) Date of publication of application: 26.02.1992
(73) Proprietor: E.I. DU PONT DE NEMOURS AND COMPANY, Wilmington Delaware 19898 (US)
(72) Inventor: McHALE, William, F., Ridley Park, PA 19078 (US); MONTGOMERY, Catherine, Campbell, Richmond, VA 23233 (US); OBAL, Walter, Douglas, West Chester, PA 19382 (US)
(74) Representative: Jones, Alan John
(86) International application number: US8901991
(87) International publication number: WO9013423

(56) References cited:
- US-A- 2 562 118
- US-A- 4 252 859
- US-A- 4 554 207

## Description

### BACKGROUND OF THE INVENTION

### 1. Field of the Invention

This invention provides a non-stick coating on rolls used for embossing polyolefin film-fibril sheets. The coating comprises a primer layer formed from an aqueous suspension of polytetrafluoroethylene containing chromic acid and phosphoric acid and at least one topcoat layer of polytetrafluoroethylene or fluoropolymer blend compositions containing copolymers of perfluorinated polyvinyl ether.

### 2. Description of the Prior Art

The production of nonwoven sheets from continuous networks of film-fibril elements is described in U.S. Patent No. 3,169,899 wherein a solution of polymer is flash-spun at a temperature above the boiling point of the solvent and at high pressure into a low pressure region, whereupon a three-dimensional network of film-fibrils forms at the spinneret. The network is spread laterally by means of a baffle and is then collected in multidirectional, overlapping, and intersecting arrangement on a moving belt.

For a soft drapable nonwoven sheet retaining good delamination and abrasion resistance useful in disposable garments etc., the film-fibril sheet is point bonded. Various methods have been disclosed for point bonding polyethylene film-fibril sheets. For example, sheets of flash-spun polyethylene film-fibril strands of the type disclosed in U.S. Patent 3,169,899 have been bonded (a) over 3 to 25% of the surface area of the sheet by passage through a loaded nip formed by a heated metal roll having 50 to 1000 hard bosses per square inch which extend from the surface of the roll to a height of at least 1.2 times the thickness of the sheet and a hard back-up roll having a Shore Durometer D hardness of at least 70, as disclosed by Miller, United States Patent 4,152,389 and (b) over 1 to 5% of the area of the sheet by passage of the sheet through in a loaded nip formed by a heated, embossed metal roll having bosses and a soft back-up roll of a 60 to 90 Shore Durometer B hardness, as disclosed by Dempsey and Lee, United States Patent 3,478,141.

At higher production speeds, higher temperatures are required for the embossing rolls because the heat transfer load on the embosser also increases. At these higher temperatures, the likelihood of the molten sheet sticking to the hot rolls increases. In addition, any stoppage in production can cause the embossing roll to be covered with molten polymer, which can adhere to the patterned rolls and can not be completely removed by, for example, brushing.

Normally, non-stick coatings are applied to such rolls to eliminate this adhesion, however, the application of non-stick coatings affect heat transfer through the rolls, thus the application must be very precise and uniform. Also, embossing patterns with small points cause additional concerns because the small points provide most of the effective contact area between the embossing roll and the sheet in the nip. Correct coating thickness is crucial in these areas, however, the coating thickness in these small contact areas is difficult to measure accurately. Coating compositions of silicones and epoxies are disclosed in U.S. Pat. No. 4,252,702. Similar coating compositions but also containing fluorocarbon resins are disclosed in U.S. Patents 4,121,000 and 4,369,279.

The prior art coatings could not handle the sustained heat transfer or loading without prematurely flaking off and losing the required non-stick property. This flaking causes the polyolefin sheet to stick to the exposed surface of the roll. The sheet must be manually removed from the area and discarded as waste. The worn coated roller must be replaced resulting in costly downtime.

There is provided by this invention a non-stick coating comprising a primer layer of polytetrafluoroethylene with chromic acid and phosphoric acid and at least one topcoat layer of polytetrafluoroethylene or fluoropolymer blend compositions containing copolymers of perfluorinated polyvinyl ether for rolls used for embossing polyolefin film-fibril sheets. The coating of the present invention provides uniform heat transfer through the roll, optimizes anti-stick properties, allows for increased throughput and extends the roll life over the coatings of the prior art.

### SUMMARY OF THE INVENTION

There is provided by this invention, an embosser roll for use in the manufacture of polyolefin film-fibril sheets having a coating comprising:
(a) at least one primer layer formed of an aqueous suspension of 10 to 98 weight% polytetrafluoroethylene, 1 to 45 weight% chromic acid and 1 to 45 weight% phosphoric acid based on the total weight of the polymer and acid, baked on the embosser roll at least 15 minutes at 200 to 370°C;
(b) at least one topcoat layer on the primer layer formed of an aqueous suspension of 50 to 100% by weight of total polymer polytetrafluoroethylene and 0 to 50% by weight of total polymer copolymers of 99.5 to 92% tetrafluoroethylene and 0.5 to 8% perfluorinated propyl vinyl ether baked on the embosser roll at 371 to 427°C.

### DETAILED DESCRIPTION OF THE INVENTION

The embosser rolls to be coated are of the type generally disclosed in U.S. Patents 4,152,389; 3,478,141; and 4,091,137. The teachings of U.S. Patents 4,152,389; 3,478,141; and 4,091,137 are incorporated herein by reference.

The roll to be coated is heat treated at a metal temperature of about 480°C for at least 4 hours to loosen the old coating and to remove any oils or substances which might be present on the surface of the roll, or might be contained inside the roll, either of which could contaminate the final coated surface. During this initial heating, the roll is mechanically rotated in the oven to insure any internal heating oils or liquids are allowed to either flow from the roll or be uniformly spread within the roll, where they will evaporate and decompose during the heating. The surface is then grit blasted to remove the old coating and provide a clean surface for the coating. The roll is grit blasted using vertical, horizontal and diagonal sweeping motions. The grit blasting material must be gentle enough to remove the coating without damaging the patterned surface of the embossing roll. The grit and particulates from the coating are removed using compressed air before the primer coat is applied to the roll.

Two different layers are applied to the roll to yield the non-stick coating of the present invention; (1) at least one primer layer and (2) at least one topcoat layer. There is a bake cycle after the application of the primer and the topcoat layer. The primer layer is an aqueous suspension of 10 to 98 weight% polytetrafluoroethylene, 1 to 45 weight% chromic acid, and 1 to 45 weight% phosphoric acid based on the combined weight of polymer and acid, as disclosed in U.S. Patent No. 2,562,118. The teachings of U.S. 2,562,118 are herein incorporated by reference.

The separate liquids of the primer layer, the polymer of tetrafluoroethylene and the mixed acid constituent, are thoroughly mixed together at room temperature by rolling the containers. Shaking creates bubbles which are undesirable. During this rolling procedure the roll to be coated is heated to 29°C surface metal temperature and held for 10 minutes.

Due to the patterned nature of the embossing rolls, a true measurement of the coating on the rolls is difficult, especially on the tips of the patterns. To address this concern, a specific volume of primer can be applied to the roll. The primer solution is strained to remove any large particles before application. Conventional compressed air spray equipment is used to spray the primer layer on the rolls at approximately 40-60 psig. The primer layer is applied in two passes, the first to apply a thickness of approximately 5 micrometers to the roll, and the second to fill in any areas missed by the first pass. Key to the process is the lightness of the mist. The volume may be checked after the first pass to determine if the correct quantity is being applied to the roll. The volume must be checked after the second pass. The volume of primer should be that which indicates a final dry film primer layer thickness of 5 to 18 micrometers. If any other volume remains, the primer should be cleaned off with water and the roll should be lightly grit blasted before re-application of the primer.

Correct primer application is essential to the application process. Traditional primer application will be very blotchy due to the minimal amount of material actually applied to the roll. The roll with the applied primer layer is placed in an oven and allowed to bake at 200 to 370°C for a time sufficient to cure the layer. Preferably, the roll is baked at 218 to 260°C metal temperature for at least 15 minutes. Uniformity of bake is also important, with a maximum of 5°C difference from one end of the roll to the other. Thermocouples can be placed on the metal roll at the ends to ensure that the ends reach the required baking temperature. After baking, the roll is allowed to cool below 49°C before applying topcoat.

The topcoat layer is a fluoropolymer blend coating composition containing copolymers of perfluorinated polyvinyl ether. Fluoropolymer blend compositions containing copolymers of perfluorinated polyvinyl ether are described in U.S. Patent No. 4,252,859. U.S. 4,252,859 is incorporated herein by reference.

The topcoat layer comprises at least one layer on the primer layer. The topcoat layer is formed of an aqueous suspension of 50 to 100% by weight of total polymer polytetrafluoroethylene and 0 to 50% by weight of total polymer perfluorinated vinyl ether copolymers of 99.5 to 92% tetrafluoroethylene and 0.5 to 8% poly(propyl vinyl ether) baked on the embosser roll at 371 to 427°C.

The topcoat is brought to room temperature and is stirred gently by rolling the container. If foaming occurs, the rolling has been too severe and the material should not be used until the foam has disappeared. The topcoat is applied at a greater thickness than the primer, and the volume approach is again used to determine the thickness of the of the topcoat. The volume of topcoat coating is measured and strained through 200 by 200 micrometer openings. A light spray is set on the compressed air paint gun, using 40 to 45 psig spray pressure.

The roll is sprayed with at least one layer so that a final total dry film topcoat thickness of 18 to 61 micrometers is reached. After a layer is applied, the volume of liquid remaining is again checked to confirm that the correct volume of coating has been applied to the roll. If more remains, additional layers of coating can be applied if uniformity of coating on the roll is adequate. If too small a volume remains to apply an additional layer, the roll must be grit blasted and the entire coating procedure repeated.

Immediately after coating, while the roll is still wet, the roll should be placed in the oven for final curing. The roll is baked in the oven for 15 minutes at 399°C metal temperature. Minimum bake must be at least 30 minutes at 371°C; maximum bake must not exceed 427°C and should not exceed 371°C for more than 3 hours. The temperature at both ends of the roll should be within 5°C.

Final inspection of the roll is made using an instrument such as a film thickness guage to detect the coating thickness. Flat areas can be attached to the ends of the rolls and/or lands can be left on the edge of the roll surface to allow a end-to-end confirmation of correct coating thickness. Visual inspection of the entire roll is made to confirm correct coating application has been made.

If desired, modifying agents, such as pigments, fillers, organic solvents, and other film forming materials may be added to the material forming either layer provided they are compatible with and stable in the presence of the other ingredients.

### EXAMPLE

An embosser roll coated in accordance with this invention had a coating comprising:
a) a primer layer of dry film thickness between 5 to 18 micrometers formed of an aqueous suspension of 42.4 weight% polytetrafluoroethylene, 4.2 weight% chromic acid, 3.6 weight% phosphoric acid and approximately 50 weight% water, baked on the embosser roll at 232°C for 15 minutes;
b) a topcoat layer of dry film thickness between 18 to 61 micrometers formed of an aqueous suspension of 94.4 weight% of total polymer polytetrafluoro-ethylene and 15.6 weight% perfluorinated vinyl ether copolymers of 96% polytetroflouroethylene and 4% poly(propyl vinyl ether) baked on the embosser roll at 399°C for 15 minutes. The aqueous suspension was approximately 50 weight% water, 1 weight pigment, 46 weight% polymer and 3% miscellaneous ingredients.

The coating had a life useful for embossing about 5 million kilograms of polyethylene film-fibril sheet.

A useful life for embossing 5.0 million kilograms of polyethylene film-fibril sheet has been demonstrated.

## Claims

1. An embosser roll for use in the manufacture of polyolefin film-fibril sheets having a coating comprising:
(a) at least one primer layer formed of an aqueous suspension of 10 to 98 weight% polytetrafluoroethylene, 1 to 45% chromic acid and 1 to 45% phosphoric acid based on the total weight of the polymer and acid, baked on the embosser roll at least 15 minutes at 200 to 370°C;
(b) at least one topcoat layer on the primer formed of an aqueous suspension of 50 to 100% by weight of total polymer polytetrafluoroethylene and 0 to 50% by weight of total polymer copolymers of 99.5 to 92% tetrafluoroethylene and 0.5 to 8% perfluorinated propyl vinyl ether baked on the embosser roll at 371 to 427°C.

2. The embosser roll of claim 1 wherein the total primer layer is of dry film thickness between 5 to 18 micrometers.

3. The embosser roll of claim 1 wherein the total topcoat layer is of dry film thickness between 18 to 61 micrometers.

## Patentansprüche

1. Prägerolle zur Verwendung bei der Herstellung von Folienfibrillenbahnen aus Polyolefin mit einer Beschichtung, umfassend:
(a) mindestens eine Grundschicht, gebildet aus einer wässrigen Suspension von 10 bis 98 Gew.% Polytetrafluorethylen, 1 bis 45 Gew.% Chromsäure und 1 bis 45 Gew.% Phosphorsäure, basierend auf dem Gesamtgewicht des Polymers und der Säuren, gehärtet mindestens 15 Minuten bei 200 bis 370 °C durch Einbrennen auf der Prägerolle;
(b) mindestens eine Deckschicht auf der Grundschicht, gebildet aus einer wässrigen Suspension von 50 bis 100 Gew.%, bezogen auf das gesamte Polymere, an Polytetrafluorethylen und 0 bis 50 Gew.%, bezogen auf das gesamte Polymere, an Copolymeren von 99,5 bis 92 % Tetrafluorethylen und 0,5 bis 8 % perfluoriertem Propylvinylether, gehärtet bei 371 bis 427 °C durch Einbrennen auf der Prägerolle.

2. Prägerolle nach Anspruch 1, worin die gesamte Grundschicht eine Trockenfilmdicke von 5 bis 18 Mikrometern aufweist.

3. Prägerolle nach Anspruch 1, worin die gesamte Deckschicht eine Trockenfilmdicke von 18 bis 61 Mikrometern aufweist.

## Revendications

1. Un rouleau à gaufrer utilisé dans la fabrication de feuils de films fibrille de polyéoléfine possédant un revêtement comprenant:
(a) au moins une couche de fond constituée par une suspension aqueuse de 10 à 98% en poids de polytétrafluoroéthylène, 1 à 45% d'acide chromique, et 1 à 45% d'acide phosphorique exprimé par rapport au poids total du polymère et de l'acide, cuite sur le rouleau à gaufrer pendant au moins 15 minutes à une température de 200 à 370°C;
(b) au moins une couche de recouvrement disposée au-dessus de la couche de fond, constituée d'une suspension aqueuse de 50 à 100% en poids du poids total des polymères, de tétrafluoroéthylène et 0 à 50% en poids par rapport au poids total de polymères, de copolymères de 99,5 à 92% de tétrafluoroéthylène et de 0,5 à 8% en poids de propylvinyléther perfluoré, cuite sur le rouleau à gaufrer à une température de 371 à 427°C.

2. Le rouleau à gaufrer selon la revendication 1, dans lequel la totalité de la couche de fond présente une épaisseur de film sec comprise entre 5 et 18 µm.

3. Le rouleau à gaufrer selon la revendication 1, dans lequel la couche de revêtement présente une épaisseur totale, à l'état de film sec, comprise entre 18 et 61 µm.
